# EUROPEAN PATENT SPECIFICATION

(11) **EP 1 852 476 B1**
(45) Date of publication and mention of the grant of the patent: **15.08.2012**
(21) Application number: 05811571.8
(22) Date of filing: 02.12.2005
(51) Int. Cl.: C09D 11/00, C09D 11/10, B41J 2/01, B41M 5/00, B41M 7/00

(54) **INKJET INK, INKJET INK SET AND METHOD OF INKJET RECORDING**
TINTENSTRAHLTINTE, TINTENSTRAHLTINTENKOMBINATION UND TINTENSTRAHLAUFZEICHNUNGSVERFAHREN
ENCRE POUR JET D'ENCRE, ENSEMBLE D'ENCRE POUR JET D'ENCRE ET PROCEDE D'IMPRESSION A JET D'ENCRE

(30) Priority: 27.01.2005 JP 2005019659; 21.07.2005 JP 2005211135
(43) Date of publication of application: 07.11.2007
(73) Proprietor: KONICA MINOLTA HOLDINGS, INC., Tokyo 100-0005 (JP)
(72) Inventor: TSUBAKI, Yoshinori, Tokyo, 193-0933 (JP)
(74) Representative: McCluskie, Gail Wilson
(86) International application number: PCT/JP2005/022161
(87) International publication number: WO 2006/080139

(56) References cited:
- EP-A2- 0 780 731
- EP-A2- 1 657 286
- JP-A- 3 216 379
- JP-A- 11 084 655
- JP-A- 56 067 309
- JP-A- 2000 181 062
- JP-A- 2004 161 942
- US-A- 4 680 368

## Description

### FIELD OF THE INVENTION

The present invention relates to an inkjet ink, particularly to an ink that excels in resistance to feathering in plain paper recording and that is suitable for recording free from beading, color bleeding, etc. on a medium of poor or no ink absorbency, and to a method of recording using this ink.

### BACKGROUND

The inkjet recording method provides high-definition image recording using a comparatively simple apparatus, and is making a rapid progress in various fields. This method is employed over a wide-ranging field, and a recording medium or an ink suited for respective purposes is utilized.

In recent years, there has been a substantial improvement in the recording speed, and efforts are being made to develop a printer having the performances capable of meeting the requirements of shortrun-printing.

However, to make an effective use of performances in the inkjet printer, it is necessary to utilize the paper that is designed specifically for inkjet and is capable of absorbing ink.

When recording on the coated paper or art paper of poor ink absorbency or on the plastic without any absorbency at all, there is a problem of so-called bleeding wherein different types of inks are mixed on the recording medium, and color mixing occurs. This has been an obstacle in ensuring versatility of the recording media with respect to the inkjet.

To solve this problem, a hot melt type inkjet recording method has been proposed. According to this proposal, a hot melt type ink composition made of solid wax and others in the room temperature is liquefied by heat, and is made to jet out by adding some sort of energy. Then the composition is deposited on a recording medium while being cooled and solidified, whereby recording dots are formed.

Since this ink is a solid at room temperature, it does not cause contamination when handled. Further, there is practically no evaporation of ink at the time of melting, hence, no clogging of the nozzle. Moreover, the composition is solidified immediately after being deposited on the recording medium, so that there is very little color bleeding. Thus, this proposal offers an ink composition that ensures excellent printing quality independently of paper quality (Patent Documents 1 and 2).

However, the image recording in such a method involves such problems as quality deterioration caused by a raised pattern of the dot, and insufficient fretting performances since the ink dot is a soft wax-like substance.

The inkjet recording ink to be cured by exposure to ultraviolet rays has been disclosed (Patent Document 3). Another proposal is a so-called non-aqueous ink using ketone and alcohol as major solvents wherein a pigment is contained as an essential component, and tri-or-higher functional polyacrylate is essential as a polymerizable material (Patent Document 4).

A further proposal is an ink using an aqueous ultraviolet polymerizable monomer (Patent Document 5).

According to these methods, ink itself is cured by a curing compound, and allows recording on a non-absorbent medium. However, a great amount of the curing component other than colorant is contained without volatilization. The recorded surface is raised by the ink dot, and hence the image quality and glossiness in particular appear unnatural.

There is concern about safety when conventionally known curing components are used. For example, even if the problem of safety can be solved, there are restrictions in the range for selection of the substances, and desired designing of the physical properties cannot be achieved.
Patent Document 1: U.S. Patent No. 4,391,369 (Specification)
Patent Document 2: U.S. Patent No. 4,484,948 (Specification)
Patent Document 3: U.S. Patent No. 4,228,438 (Specification)
Patent Document 4: Unexamined Japanese Patent Application Publication No. Hei 5-64667 (Tokkohei)
Patent Document 5: Unexamined Japanese Patent Application Publication No. Hei 7-224241 (Tokkaihei)

### DISCLOSURE OF INVENTION

### PROBLEMS TO BE SOLVED BY THE INVENTION

The object of the present invention is to provide an inkjet ink characterized by great versatility for recording medium, superb resistance of feathering and bleeding, superior bondability to a substrate and excellent printing quality.

### MEANS FOR SOLVING THE PROBLEMS

The aforementioned problems can be solved by the following Structure:
(1) An inkjet ink containing at least a colorant, water and a high molecular weight compound which has a hydrophilic main chain and plural side chains on the hydrophilic main chain and is cross-linkable among side chains by being irradiated with active energy rays, the inkjet ink is characterized in that the colorant is anionic and the side chains of the high molecular compound are anionic or nonionic.
(2) The inkjet ink described in the above (1)is characterized in that the inkjet ink contains the high molecular weight compound in an amount of from 0.8 to 5.0 % by mass for the total amount of the ink.
(3) The inkjet ink described in the above (1) or (2) is characterized in that a partial structure of the hydrophilic main chain and the plural side chains is represented by General formula (A):

   Poly-{(X₁)ₘ-[B-(Y₁)ₙ]ₚ}

   in the formula, Poly represents the hydrophilic main chain, an inside of { } represents the side chains, X₁ represents a (p+1) valent connecting group, B represents a cross-linkable group, and Y1 represents a hydrogen atom or a substituent, and m is 0 or 1, n is 0 or 1 and p represents a positive integer, and when p is 2 or more, a plurality of B and Y₁ are the same to each other or different from each other.
(4) The inkjet ink described in any one of the above (1) to (3) is characterized in that the hydrophilic main chain is a saponified substance of polyvinyl acetate having a saponification degree of 77 to 99 % and a polymerization degree of 200 to 4000.
(5) The inkjet ink described in any one of the above (1) to (4) is characterized in that the modification rate of the side chains to the hydrophilic main chain is 1 mol% to 4 mol%.
(6) The inkjet ink described in any one of the above (1) to (5) is characterized in that the inkjet ink further contains a water-soluble photo-polymerization initiator.
(7) An ink set is characterized by comprising: a plurality of inkjet inks described in any one of the above (1) to (6).
(8) An inkjet recording method is characterized by comprising: jetting the inkjet ink described in any one of the above (1) to (6); irradiating the jetted inkjet ink with ultraviolet rays; and drying the inkjet ink.
(9) An inkjet recording method is characterized by comprising: jetting the inkjet ink of the ink set described in the above (7); irradiating the jetted inkjet ink with ultraviolet rays; and drying the inkjet ink.
(10) The inkjet recording method described in the above (8) or (9) is characterized in that the recording is conducted for a regular paper.
(11) The inkjet recording method described in the above (8) or (9) is characterized in that the recording is conducted for an art paper or a coated paper.
(12) The inkjet recording method described in the above (8) or (9) is characterized in that the recording is conducted for a non-absorptive medium.
(13) An inkjet ink is characterized by containing at least a colorant, an aqueous and a high molecular compound which has a hydrophilic main chain and plural side chains on the hydrophilic main chain and is cross-linkable among side chains by being irradiated with active energy rays.

### EFFECTS OF THE INVENTION

The present invention provides an inkjet ink characterized by the capability of recording on various types of recording media and excellent resistance of feathering and bleeding, superior bondability to a substrate and excellent printing quality.

### BEST FORM OF EMBODIMENT OF THE PRESENT INVENTION

The following describes the details of the present invention:
<A crosslinkable polymer compound by actinic energy rays>

A high molecular weight compound that is made up of a hydrophilic backbone chain (main chain) having multiple side chains among which a crosslinking bond can be made by exposure to actinic energy rays is the compound wherein a modified group such as a photodimerization, photodecomposition, photopolymerization photomodification or photodepolymerization type is introduced into the side chain, with respect to at least one hydrophilic resin selected from a saponified substance of vinyl polyacetate, polyvinyl acetate, polyethylene oxide, polyalkylene oxide, polyvinyl pyrrolidone, polyacryl amide, polyacrylic acid, hydroxy ethyl cellulose, methyl cellulose, hydroxy propyl cellulose, derivative of the aforementioned hydrophilic resin, and a group made of these copolymers. The photo-polymerization type crosslinking group is preferably used from the viewpoint of sensitivity and the performance of the image to be generated.

There is a preferred combination between the ionic property of the colorant and that of the side chain of the aforementioned high molecular weight compound. It has been found out that, when the colorant is anionic while the side chains of the high molecular weight compound are anionic or nonionic, excellent image fastness, ink keeping quality and continuous emission are ensured. The nonionic property is most preferred for the side chain. The reason is not very clear, but the aforementioned combination of ions reduces decomposition of the ink composition and association of the ink composition. This may be related to the aforementioned effect.

It is preferred that the partial structure of the hydrophilic backbone chain and side chains of the high molecular weight compound used in the present invention wherein a crosslinking bond can be made by exposition to actinic energy rays can be expressed by the following formula (A):

General formula (A) Poly-{(X₁)ₘ-[B-(Y₁)ₙ]ₚ}

In the formula, Poly denotes a hydrophilic backbone chain, and is preferably a saponified substance of vinyl polyacetate, polyvinyl acetate, polyethylene oxide, polyalkylene oxide, polyvinyl pyrrolidone, polyacryl amide, polyacrylic acid, hydroxy ethyl cellulose, methyl cellulose, hydroxy propyl cellulose or derivative of the aforementioned hydrophilic resin, and a group made of these copolymers.

"{ }" indicates the side chain. In the side chain, X₁ shows the bonding group of (p + 1) value. The p shows an integer preferably in the range from 1 through 5. To put it more specifically, it denotes the bonding group wherein X₁ is divalent when p = 1. It is exemplified by alkylene group, allylene group, hetero allylene group, ether group, thio ether group, imino group, ester group, amide group and sulfo group. They can be combined to form one group having a valence of 2 or more. When p = 2 or more, multiple Bs and Ys (to be described later) can be the same or different.

X₁ is preferably exemplified by a bonding group having a valence of 2 or more made of a combination of at least alkylene oxide and aromatic group.

"B" denotes a crosslinking group. To put it more specifically, it is a group containing a double bond or triple bond, and is exemplified by a acrylic group, methacrylic group, vinyl group, allyl group, diazo group and azide group.

"Y₁" indicates a hydrogen atom or substituent. The substituent is exemplified by a halogen atom (e.g., fluorine atom and chlorine atom), an alkyl group (e.g., methyl, ethyl, butyl, pendyl, 2-methoxy ethyl, trifluoromethyl, 2-ethylhexyl and cyclohexyl), aryl group (e.g., phenyl, p-tolyl and naphthyl), acyl group (e.g., acetyl, propionyl and benzoyl), an alkoxy group (e.g., methoxy, ethoxy and butoxy), an alkoxy carbonyl group (e.g., methoxy carbonyl and i-propoxy carbonyl), an acyloxy group (e.g., acetyloxy and ethyl carbonyloxy), a carbamoyl group (e.g., methyl carbamoyl, ethyl carbamoyl, butyl carbamoyl and phenyl carbamoyl), a sulfamoyl group (e.g., sulfamoyl, methyl sulfamoyl, dimethyl sulfamoyl, and phenyl sulfamoyl), an alkylthio group (e.g., methylthio, ethylthio and octylthio), an arylthio group (e.g., phenylthio and P-tolylthio), an alkylureide group (e.g., methylureide, ethylureide, methoxy ethylureide and dimethyl ureide), an aryl ureide group (e.g., phenyl ureide), an alkyl sulfoneamide (e.g., methane sulfoneamide, ethane sulfoneamide, butane sulfoneamide, trifluoro methylsulfone amide, and 2, 2, 2-trifluoro ethyl sulfoneamide), an aryl sulfoneamide group (e.g., phenyl sulfoneamide and trisulfone amide), an alkylamino sulfonylamino group (e.g., methylamino sulfonylamino and ethylamino sulfonylamino), an arylamino sulfonyl amino group (e.g., phenylamino sulfonyl amino), a hydroxy group, a heterocyclic ring group (e.g., pyridyl, pyrazolyl, imidazolyl, furyl and thienyl). They can contain a substituent.

"m" denotes 0 or 1.

"n" indicates 0 or 1.

The saponified substance of polyvinyl acetate is preferably used in the hydrophilic backbone chain from the viewpoint of the simplicity of introducing the side chain and handling ease. The degree of saponification is 77% or more without exceeding 99%. The degree of polymerization is preferably 2000 to 4000, more preferably 300 or more without exceeding 4000. The modification rate of the side chain to the backbone chain is preferably 0.3 or more without exceeding 4 mol%, more preferably 1.0 or more without exceeding 4.0 mol%. If it is less than 0.3 mol%, crosslinking property is insufficient and the advantages of the present invention cannot be effectively utilized. If it is greater than 4 mol%, the crosslinking density will be excessive, with the result that a hard and brittle film of smaller strength will be produced.

In the high molecular weight compound of the present invention wherein a crosslinking bond can be made by exposition to actinic energy rays, the photosensitive resin disclosed in the Unexamined Japanese Patent Application Publication No. Sho 56-67309 (Tokkaisho) as the more preferable structure is a resin composition containing the side chain of the 2-azide-5-nitrophenyl carbonyloxy ethylene structure (nonionic) expressed by the following formula (1) in the polyvinyl alcohol structure, or the side chain of the 4-azide-3-nitrophenyl carbonyloxy ethylene structure (nonionic) expressed by the following formula (2).

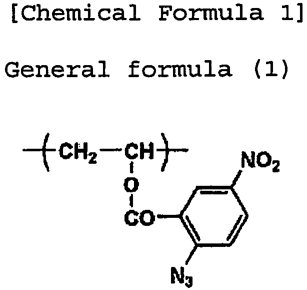

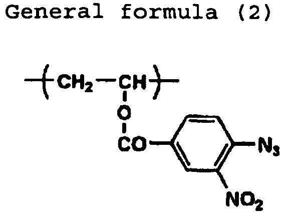

Further, the side chain (anionic) of the modified group expressed by the following general formula (3) is also preferably used.

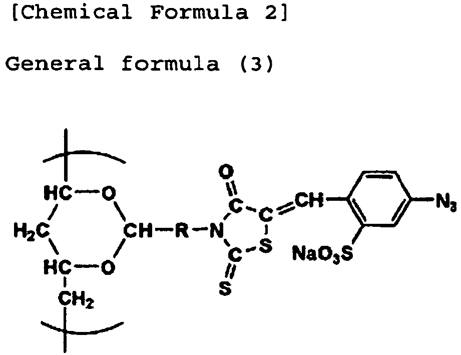

In the formula, R indicates an alkylene group or aromatic group, preferably a benzene ring.

The resin (nonionic) expressed by the following general formula (4) disclosed in the Unexamined Japanese Patent Application Publication No. 2000-181062 and Unexamined Japanese Patent Application Publication No. 2004-189841 is preferably used as the photopolymerization type modified group from the viewpoint of reactivity.

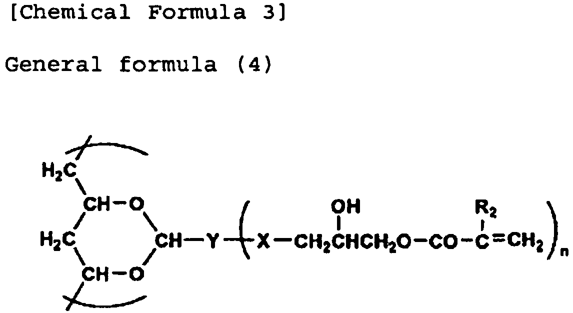

In the formula, R₂ denotes Me or H, and n indicates 1 or 2. X represents -(CH₂)ₘ-COO- or -O-, Y shows an aromatic ring or a single bond. m shows an integer from 0 through 6.

Further, the photo-polymerization type modified group (nonionic) expressed by the following general formula (5) as disclosed in the Unexamined Japanese Patent Application Publication No. 2004-161942 is preferably used as the conventionally known water-soluble resin.

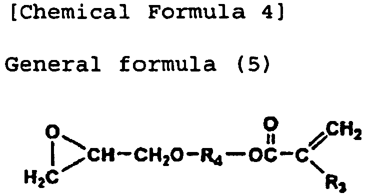

In the formula, R₃ denotes Me or H, and R₄ shows the straight chain or branched chain alkylene group containing 2 through 20 carbon atoms.

Further, the modified group (nonionic) expressed by any one of the following general formulas (6) through (8) is also preferably used.

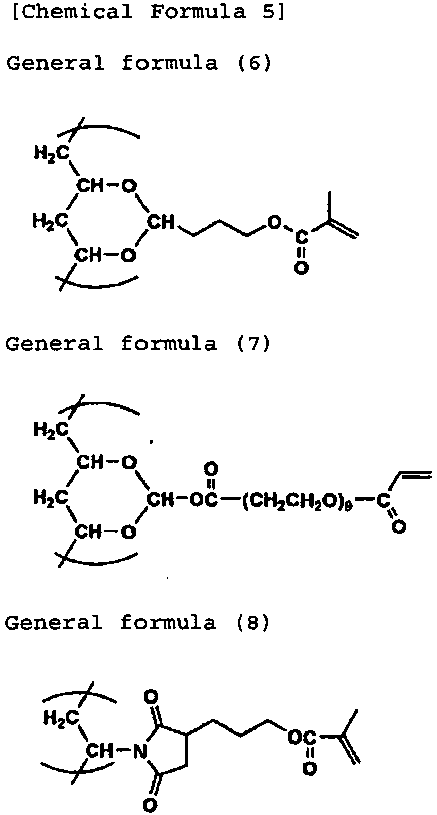

0.8% through 5.0 by mass of actinic energy ray crosslinked resin is preferably contained with respect to the entire mass of ink. When this amount exceeds 0.8% by mass, the crosslinking efficiency will be improved, and the resistance to the beading or color bleeding will be improved by a rapid rise of the ink viscosity subsequent to crosslinking. When the amount is below 5.0% by mass, adverse effect will not be given to the ink physical properties and ink-internal status, and this is preferred from the viewpoint of ensuring excellent emission and ink keeping quality.

In the actinic energy ray crosslinked resin of the present invention, crosslinking is provided through crosslinking bond among the side chains with respect to the backbone chain originally having a certain degree of polymerization. This gives a considerable effect of increasing the amount of the molecule per photon with respect to actinic energy ray crosslinked resin that is polymerized through general chain reaction. In the meantime, in the conventionally known actinic energy ray crosslinked resin, the number of the crosslinking points cannot be controlled, and hence the physical properties of the film subsequent to curing cannot be placed under control, with the result that a hard and brittle film is produced.

In the resin used in the present invention, the number of the crosslinking points can be completely controlled by the length of the hydrophilic backbone chain and the amount of the side chain introduced. Thus, the physical properties of ink film can be controlled in conformity to a particular purpose.

Further, almost all the conventionally known ink that is cured upon exposure to the actinic energy ray except for the colorant is curable. Therefore, dots are raised subsequent to curing, and the image quality typically represented by the glossiness is deteriorated. By contrast, in the resin used in the present invention, only a small amount is required, and a lot of dry components are utilized. This improves the image quality subsequent to drying and ensures superb fixing property.

### (Photo-polymerization initiator and sensitizer)

In the present invention, the photo-polymerization initiator and sensitizer are preferably added. These compounds can be dissolved or dispersed in the solvent, or can be chemically bonded with the photosensitive resin.

There is no particular restriction to the type of the photo-polymerization initiator and sensitizer to be used. The conventionally known substance can be used.

Although there is no particular restriction to the type of the photo-polymerization initiator and sensitizer to be used, a water-soluble substance is preferably used from the viewpoint of mixing and reaction efficiency. 4-(2-hydroxy ethoxy)phenyl-(2-hydroxy-2-prolyl)ketone (HMPK), thioxanthone ammonium salt (QTX), and benzophenone ammonium salt (ABQ) are preferably used particularly from the viewpoint of the efficiency of mixing with the aqueous solvent.

Further, from the viewpoint of compatibility with the resin, 4-(2-hydroxy ethoxy)phenyl-(2-hydroxy-2-prolyl)ketone (n = 1, HMPK) expressed by the general formula (9), and the ethylene oxide adduct (n = 2 through 5) thereof are more preferably utilized.

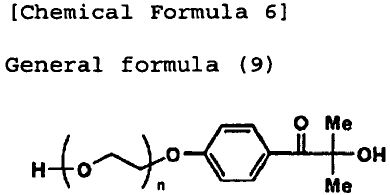

In the formula, "n" denotes an integer from 1 through 5.

Other examples are:
benzophenone related substances such as benzophenone, hydroxy benzophenone, bis-N-, N-dimethylamino benzophenone, bis-N-, N-diethylamino benzophenone, and 4-methoxy-4' dimethylamino benzophenone;
thioxanthone related substances such as thioxanthone, 2,4-diethyl thioxanthone, isopropyl thioxanthone, chloro thioxanthone, and isopropoxy chloro thioxanthone;
anthoraquinone related substances such as ethylanthracene, benzanthracene, amino anthracene, and chloro anthracene;
acetophenone related substances;
benzoin ether related substances such as benzoin methyl ether;
2, 4, 6-trihalomethyl triazine related substances;
1-hydroxy cyclohexylphenyl ketone;
2-(o-chlorophenyl)-4, 5-diphenyl imidazole dimmer;
2-(o-chlorophenyl)-4, 5-di(methoxy phenyl) imidazole dimmer;
2-(o-fluorophenyl)-4, 5-phenyl imidazole dimmer;
2-(o-methoxyphenyl)-4, 5-phenyl imidazole dimmer;
2-(p-methoxyphenyl)-4, 5-diphenyl imidazole dimmer;
2-di(p-methoxyphenyl)-5-phenyl imidazole dimmer;
2,4,5-triaryl imidazole dimer of 2-(2, 4-dimethoxy phenyl)-4, 5-diphenyl imidazole dimer;
benzyl dimethyl ketal;
2-benzyl-2-dimethylamino-1-(4-morpholino phenyl)butane-1-one;
2-methyl-1-[4-(methylthio)phenyl]-2-morpholino-1-propanone;
2-hydroxy-2-methyl-1-phenyl-propane-1-on;
1-[4-(2-hydroxy ethoxy)-phenyl]-2-hydroxy-2-methyl-1-promape-1-on;
phenanthrene quinine;
9, 10-phenanthrene quinine;
benzoin related substances such as methylbenzoin and ethylbenzoin;
acridine derivatives such as 9-phenyl acridine and 1-7-bis(9, 9'-acridinyl)heptane;
bisacyl phosphine oxide; and
the mixture thereof. These substances can be used independently and in combination.

An accelerating agent can also be added in addition to the photo-polymerization initiator. It is exemplified by p-dimethyl amino ethyl benzoate, p-dimethyl amino isoamyl benzoate, ethanol amine, diethanol amine, and triethanol amine.

These photo-polymerization initiators are preferably grafted to the side chain instead of the hydrophilic backbone chain.

### (Actinic energy ray irradiating method)

The actinic energy ray of the present invention is exemplified by electron beam, ultraviolet rays, α rays, β rays, γ rays and X-rays. Of these examples, the electron beam and ultraviolet rays are preferably used because of absence of hazards to human body, handing ease and wide spread for industrial use.

When the electron beam is used, the dose is preferably 0.1 through 30 Mrad. If it is below 0.1 Mrad, a sufficient effect of irradiation cannot be obtained. If it exceeds 30 Mrad, the support member may be deteriorated. This must be avoided.

When ultraviolet rays are used, the conventionally known light source can be used, as exemplified by a mercury lamp of low, medium or high pressure having an operation pressure of 0.1 kPa through 1 Mpa, a metal halide lamp, a xenon lamp having an emission wavelength in the ultraviolet range, cold-cathode tube, hot-cathode tube or LED.

### (Light irradiation conditions subsequent to ink emission)

The actinic energy ray is preferably emitted 0.001 through 1.0 second, more preferably 0.001 through 0.5 second, after emission of the ink. To form a high definition image, it is particularly important that the irradiation timing should be as early as possible.

### (Lamp installation)

The method of emitting the actinic energy ray is disclosed in the Unexamined Japanese Patent Application Publication No. Sho 60-132767. In this proposal, Light sources are arranged on both sides of the head unit and a shuttle method is used for scanning between the head and light source. Light is applied after a predetermined time subsequent to arrival of the ink. Further, curing is terminated by another light source that does not depend on driving. In the U.S. Patent No. 6.145,975, an optical fiber is used; further, the light of the collimated light source is applied to the mirror surface arranged on the side of the head unit, and the ultraviolet ray is applied to the recording section. The image forming process of the present invention allows use of any of these irradiation methods.

Further, the actinic energy ray can be applied in two steps: 0.001 through 2.0 seconds after arrival of the ink, actinic energy ray is applied in the aforementioned method, then actinic energy ray is further applied. This method is also preferably used. The method of applying actinic energy rays in two steps suppresses the shrinkage of recording material that may occur while the ink is cured.

### «Colorant»

Various types of dyes and pigments conventionally known in the inkjet method can be used as the colorant used in the inkjet ink of the present invention. The colorant is anionic in contrast to the ionic property on the side chain of the crosslinking type resin by actinic energy rays.

### <Dye>

There is no particular restriction to the type of the dye used in the present invention. The dye is exemplified by an anionic dye including a water-soluble dye such as an acid dye, direct dye and reactive dye, as well as a dispersed dye.

### <Water-soluble dye>

The anionic water-soluble dye that can be used in the present invention is exemplified by azo dye, methine dye, azomethine dye, xanthene dye, quinone dye, phthalo cyanine dye, triphenyl methane dye, and diphenyl methane dye. The following shows the specific compounds, without the present invention being restricted thereto.

The following can be mentioned:
<C.I. Acid Yellow>
   1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246,
<C.I. Acid Orange>
   3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168,
<C.I. Acid Red>
   88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,
<C.I. Acid Violet>
   17, 19, 21, 42, 43, 47, 48, 49, 54, 66, 78, 90, 97, 102, 109, 126,
<C.I. Acid Blue>
   1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350,
<C.I. Acid Green>
   9, 12, 16, 19, 20, 25, 27, 28, 40, 43, 56, 73, 81, 84, 104, 108, 109,
<C.I. Acid Brown>
   2, 4, 13, 14, 19, 28, 44, 123, 224, 226, 227, 248, 282, 283, 289, 294, 297, 298, 301, 355, 357, 413,
<C.I. Acid Black>
   1, 2, 3, 24, 26, 31, 50, 52, 58, 60, 63, 107, 109, 112, 119, 132, 140, 155, 172, 187, 188, 194, 207, 222,
<C.I. Direct Yellow>
   8, 9, 10, 11, 12, 22, 27, 28, 39, 44, 50, 58, 79, 86, 87, 98, 105, 106, 130, 132, 137, 142, 147, 153,
<C.I. Direct Orange>
   6, 26, 27, 34, 39, 40, 46, 102, 105, 107, 118,
<C.I. Direct Red>
   2, 4, 9, 23, 24, 31, 54, 62, 69, 79, 80, 81, 83, 84, 89, 95, 212, 224, 225, 226, 227, 239, 242, 243, 254,
<C.I. Direct Violet>
   9, 35, 51, 66, 94, 95,
<C.I. Direct Blue>
   1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291,
<C.I. Direct Green>
   26, 28, 59, 80, 85,
<C.I. Direct Brown>
   44, 106, 115, 195, 209, 210, 222, 223,
<C.I. Direct Black>
   17, 19, 22, 32, 51, 62, 108, 112, 113, 117, 118, 132, 146, 154, 159, 169,
<C.I. Reactive Yellow>
   2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176,
<C.I. Reactive Orange>
   1, 4, 5, 7, 11, 12, 13, 15, 16, 20, 30, 35, 56, 64, 67, 69, 70, 72, 74, 82, 84, 86, 87, 91, 92, 93, 95, 107,
<C.I. Reactive Red>
   2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235,
<C.I. Reactive Violet>
   1, 2, 4, 5, 6, 22, 23, 33, 36, 38,
<C.I. Reactive Blue>
   2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,
<C.I. Reactive Green>
   8, 12, 15, 19, 21,
<C.I. Reactive Brown>
   2, 7, 9, 10, 11, 17, 18, 19, 21, 23, 31, 37, 43, 46,
<C.I. Reactive Black>
   5, 8, 13, 14, 31, 34, 39,
<C.I. Hood Black>
   1, 2,

### <Pigment>

A conventionally known organic or inorganic pigment can be used as the pigment that can be used in the present invention. Such a pigment is anionic and can be exemplified by:
azo pigments such as azolake, insoluble azo pigment, condensed azo pigment, and chelate azo pigment;
polycyclic pigments such as phthalo cyanine pigment, perylene and perylene pigment, anthoraquinone pigment, quinacridon pigment, dioxazine pigment, thioindigo pigment, isoindoline pigment and quinophthalo pigment;
dye lakes such as acid dye type lake;
organic pigments such as nitro pigment, nitroso pigment, aniline black, and daylight fluorescent pigment; and inorganic pigments such as carbon black.

The following describes specific examples of the organic pigments:
The magenta or red pigments are exemplified by C.I. pigment Red 2, C.I. pigment Red 3, C.I. pigment Red 5, C.I. pigment Red 6, C.I. pigment Red 7, C.I. pigment Red 15, C.I. pigment Red 16, C.I. pigment Red 48 : 1, C.I. pigment Red 53 : 1, C.I. pigment Red 57 : 1, C.I. pigment Red 122, C.I. pigment Red 123, C.I. pigment Red 139, C.I. pigment Red 144, C.I. pigment Red 149, C.I. pigment Red 166, C.I. pigment Red 177, C.I. pigment Red 178, and C.I. pigment Red 222.

The orange or yellow pigments are exemplified by C.I. pigment Orange 31, C.I. pigment Orange 43, C.I. pigment Yellow 12, C.I. pigment Yellow 13, C.I. pigment Yellow 14, C.I. pigment Yellow 15, C.I. pigment Yellow 17, C.I. pigment Yellow 74, C.I. pigment Yellow 93, C.I. pigment Yellow 94, C.I. pigment Yellow 128 and C.I. pigment Yellow 138.

The green or cyan pigments are exemplified by C.I. pigment Blue 15, C.I. pigment Blue 15 : 2, C.I. pigment Blue 15 : 3, C.I. pigment Blue 16, C.I. pigment Blue 60 and C.I. pigment Green 7.

### <Dispersant>

The following water-soluble resins can be used as the water-soluble high polymer dispersant to ensure stable dispersion of the aforementioned pigment in the ink. They are preferably used from the viewpoint of emission stability.

The preferably used water-soluble resins are exemplified by such water-soluble resins as styrene-acrylic acid-alkyl acrylate ester copolymer, styrene-acrylic acid polymer, styrene-maleic acid polymer, styrene-maleic acid-alkyl acrylate ester copolymer, styrene-methacrylic acid copolymer, styrene-methacrylic acid-alkyl acrylate ester copolymer, styrene-maleic acid half ester copolymer, vinyl naphthalene-acrylic acid copolymer and vinyl naphthalene-maleic acid copolymer.

The amount of the water-soluble resin contained in the total amount of ink is preferably 0.1 through 10% by mass, more preferably 0.3 through 5% by mass.

Two types or more of these water-soluble resin can be used in combination.

### <Anionic pigment>

The anionic pigment that can be used in the present invention is preferably the pigment formed by dispersing the aforementioned pigment with the anionic high molecular dispersant or anionic modified self-dispersing pigment from the viewpoint of ensuring dispersion stability.

The anionic high molecular dispersant refers to the dispersant which contains an acid group in the molecule, and which has an anionic group obtained by neutralizing this acid group with a basic compound. The basic compound used in this case is exemplified by the hydroxides of alkali metal such as sodium hydroxide and potassium hydroxide, and amine related substances such as ammonium, alkylamine and alkanol amine. Amine related substances are preferably used in the present invention.

There is no particular restriction to the anionic high molecular dispersant used preferably in the present invention, which is exemplified by:
polyvinyl alcohols related substances;
polyvinyl pyridone related substances;
acrylic resins such as polyacrylic acid, acrylic acid-acrylnitryl copolymer, potassium acrylate-acrylnitryl copolymer, vinyl acetate-acrylic acid ester copolymer and acrylic acid-acrylic acid ester copolymer;
styrene acrylic resins such as styrene-acrylic acid copolymer, styrene-methacrylic acid copolymer, styrene-methacrylic acid-acrylic acid ester copolymer, styrene-α-methyl styrene-acrylic acid copolymer, and styrene-α-methyl styrene-acrylic acid ester copolymer;
vinyl acetate copolymers such as styrene maleic acid copolymer, styrene anhydrous maleic acid copolymer, vinyl naphthalene-acrylic acid copolymer, vinyl naphthalene-maleic acid copolymer, vinyl acetate-ethylene copolymer, vinyl acetate-fatty acid vinylethylene copolymer, vinyl acetate-maleic acid ester copolymer, vinyl acetate-crotonic acid copolymer, and vinyl acetate-acrylic acid copolymer; and
copolymers such as the salts thereof or a homopolymer, copolymer and ter-polymer whose resin has a functionality of carbonic acid, sulfonic acid or phosphonic acid.

The monomer giving functionality of acid is exemplified by acrylic acid, methacrylic acid, crotonic acid, maleic acid, anhydrous maleic acid, itaconic acid, mesaconic acid, fumaric acid, citraconic acid, vinyl acetate, acryloxy propionic acid, vinyl sulfonate, styrene sulfonate, 2-acrylamide-2-methyl propane sulfonic acid, allyl sulfonate, allyl phosphonate, vinyl phosphonate, and vinyl sulfonate.

The anionic modified self-dispersing pigment preferably used in the present invention refers to a pigment which has an anionic base on the surface and which can be dispersed without dispersant. The anionic modified self-dispersing pigment has an acid group modified in the pigment. This is neutralized by the basic compound so that dispersion can be achieved in water as an anionic base, without the help of the dispersant

The pigment having an acid group on the surface refers to the pigment whose particle surface is directly modified by the acid group, or the pigment wherein the acid group is bonded directly or through a joint by an organic substance containing the nucleus of the organic pigment.

The acid group (also called the polar group) is exemplified by the sulfonic acid group, carbonic acid group, phosphoric acid group, boric acid group, and hydroxyl group. The sulfonic acid group or carbonic acid is preferably used. More preferably, the sulfonic acid group is used.

The modifier of the acid group is exemplified by a processing agent containing sulfur such as sulfuric acid, fuming sulfuric acid, sulfur trioxide, chloro sulfuric acid, fluoro sulfuric acid, amido sulfuric acid, pyridine salt sulfonate and sulfamic acid; and calboxylating agent such as sodium hypochlorite and potassium hypochlorite that introduces carbonic acid group by oxidizing the surface of pigment particle. Of these, a sulfonating agent such as sulfur trioxide, pyridine salt sulfonate and sulfamic acid, or a calboxylating agent is preferably used. The hydroxide of alkali metal such as sodium hydroxide and potassium hydroxide, or an amine related substance such as ammonium, alkylamine and alkanolamine is preferably used as the basic compound for neutralizing the acid group. The amine related substance is preferably used in particular in the present invention.

The method of getting pigment particles having a polar group on the surface is exemplified by the method of introducing the polar group such as sulfonic acid group or the salt thereof into at least part of the pigment surface, by using an appropriate oxidizing agent to oxidize the surface of the pigment disclosed in the WO97/48769, Unexamined Japanese Patent Application Publications Nos. Hei 10-110129, Hei 11-246807, Hei 11-57458, Hei 11-189739, Hei 11-323232 and 2000-265094. To put it more specifically, this substance can be prepared by oxidizing the carbon black with concentrated nitric acid, or in the case of colored pigments by oxidizing it with the sulfamic acid, sulfonated pyridine salt and amido sulfuric acid in sulfolane or N-methyl-2-pyrrolidone. If this reaction has caused excessive oxidation and a water-soluble substance is created, such a substance is removed, and a refining process is applied, whereby the pigment dispersant can be obtained. Further, when the sulfonic acid is introduced on the surface by oxidation, the acid group can be neutralized by a basic compound, as required.

According to another method, the pigment derivative disclosed in the Unexamined Japanese Patent Application Publications Nos. Hei 11-49974, 2000-273383, and 2000-303014 is adsorbed on the surface of the pigment particles by the process of milling and others. Further, the pigment disclosed in the Tokugan Nos. 2000-377068, 2001-1495, and 2001-234966 is dissolved in solvent together with the pigment derivative after that, it is crystallized in a poor solvent. Any of these methods allows easy deposition of the pigment particle containing a polar group on the surface.

In the present invention, the polar group can be either free or in the form of salt. It may also contain a counter salt. The counter salt is exemplified by inorganic salts (e.g., lithium, sodium, potassium, magnesium, calcium, aluminum, nickel and ammonium), and organic salts (e.g., triethyl ammonium, diethyl ammonium, pyridinium, and triethanol ammonium). The counter salt having a valence of 1 is preferably used.

The average particle size of the pigment dispersant used for the inkjet ink of the present invention is preferably 500 nm or less, more preferably 200 nm or less. It is preferably 10 nm or more without exceeding 200 nm, more preferably 10 nm or more without exceeding 150 nm. If the average particle size of the pigment dispersant is greater than 500 nm, dispersion will be unstable. If the average particle size of the pigment dispersant is below 10 nm, the pigment dispersant will also be unstable and the ink keeping quality tends to deteriorate.

The particle size of the pigment dispersant can be measured by a commercially available particle size measuring instrument based on the light scattering method, electrophoresis method, and laser Doppler method. The particle size can also be obtained by photographing the images of 100 particles or more with a transmission electron microscope, whereby these images are also measured by performing statistical processing using an image analysis software such as Image-Pro (manufactured by Media Cybernetics Inc.).

The pigment can be dispersed by a ball mill, sand mill, attriter, roll mill, agitator, Henschel mixer, colloid mill, ultrasonic homogenizer, pearl mill, wet jet mill, paint shaker and others.

The content of the colorant that can be dispersed or dissolved in the water used in the inkjet ink of the present invention is 1 through 10% by mass with respect to the total mass of ink.

### <Water-soluble solvent>

Water-soluble solvent is preferably used as the solvent of the present invention. The solvent mixture of water and water-soluble organic solvent is preferably used as the aqueous solvent. The preferably used water-soluble organic solvent is exemplified by alcohols (e.g., methanol, ethanol, propanol, isopropanol, butanol, isobutanol, secondary butanol and tertiary butanol), polyvalent alcohols (e.g., ethylene glycol, diethylene glycol, triethylene glycol, polyethylene glycol, propylene glycol, dipropylene glycol, polypropylene glycol, butylene glycol, hexanediol, pentanediol, glycerine, hexane triol, and thiodiglycol), polyvalent alcohol ethers (e.g., ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, ethylene glycol monomethyl ether acetate, triethylene glycol monoethyl ether, triethylene glycol monoethyl ether, triethylene glycol monobutyl ether, ethylene glycol monophenyl ether and propylene glycol monophenyl ether), amines (e.g., ethanol amine, diethanol amine, triethanol amine, N-methyl diethanol amine, N-ethyl diethanol amine, morpholine, N-ethyl morpholine, ethylene diamine, diethylene diamine, triethylene tetraamine, tetraethylene pentaamine, polyethylene imine, pentamethyl diethylene triamine, and tetramethyl propylene diamine), amides (e.g., formamide, N, N-dimethyl formamide, and N, N-dimethyl acetoamide), heterocyclic rings (e.g., 2-pyrrolidone, N-methyl-2-pyrrolidone, cyclohexyl pyrrolidone, 2-oxazolidone, and 1,3-dimetyl-2-imidazolidinone), and sulfoxides (e.g., dimethyl sulfoxides).

### <Surface active agent>

The surface active agent preferably used in the ink of the present invention is exemplified by:
an anionic surface active agent such as alkyl sulfate, alkyl ester sulfate, dialkylsulfosuccinates, alkyl naphthalene sulfonic acid, alkyl phosphate, polyoxy alkylene alkyl ether phosphate, and fatty acid salt;
a nonionic surface active agent such as polyoxyethylene alkylethers, polyoxyalkylene alkylphenylethers, acetylene glycols, and polyoxy ethylene-polyoxy propylene block copolymer;
a activator such as glycol ester, sorbitan ester, polyoxy ethylene fatty acid amide, and amine oxide; and
a cationic surface active agent such as alkylamine salts and quaternary ammonium salts.

These surface active agents can also be used as pigment dispersants. Particularly, anionic and nonionic surface active agents are preferably used.

### <Additives>

In the present invention, the conventionally known additives can be contained. Such additives are exemplified by a fluorescent whitening agent, antifoaming agent, lubricating agent, preservative, thickener, antistatic agent, matting agent, water-soluble polyvalent metallic salt, acid base, pH regulating agent such as buffer agent, antioxidant, surface tension regulating agent, non-resistance regulating agent, rust preventive agent, and inorganic pigment.

### <Recording sheet>

Paper can be classified into coated paper and non-coated paper. The coated paper includes the art paper wherein the amount of coating per square meter is about 20 grams on one side, the coated paper wherein the amount of coating per square meter is about 10 grams on one side, the light-weight coated paper wherein the amount of coating per square meter is about 5 grams on one side, very thinly coated paper, matt coated paper finished by matting, dull-coated paper finished by dull coating, and newspaper. The non-coated paper includes printing paper A using 100% chemical pulps, printing paper B using 70% or more chemical pulps, printing paper C using 40 or more through 70% exclusive, printing paper D using less than 40% exclusive, and gravure paper having been subjected to a process of calendering containing a mechanical pulp. Further details are shown in "A Handbook of Paper Processing in Recent Years" by the Paper Processing Handbook Edition Committee, published by Tectimes, and "A Handbook of Printing Engineering" by the Japan Society of Printing Engineers.

Plain paper (regular paper) refers to the non-coated paper, special printing paper, and 80 through 200 µm non-coated paper constituting a part of the computer output paper. The plain paper used in the present invention is exemplified by high-quality printing paper, intermediate-quality printing paper, low-quality printing paper, thin printing paper, very thinly coated printing paper and colored quality paper, form paper, PPC paper and other computer output paper. To put it more specifically, the following paper and various types of modified or processed paper using the same can be mentioned. However, it is to be understood that the present invention is not restricted thereto.

Examples are:
quality paper, colored quality paper, recycled paper, duplicating paper including colored paper, OCR paper, carbonless paper including colored paper, Yupo 60, 80 and 100 microns, Yupocoat 70 and 90 microns, other synthetic paper, one-sided art paper (68 kg), coat paper (90 kg), format paper (70, 90 and 110 kg), Form PET 38 microns, and Mitsuorikun (all manufactured by Kobayashi Recording Paper);
OK quality paper, new OK quality paper, Sunflower, Phenix, OK Royal White, quality paper for export (NPP, NCP, NWP; Royal White), OK book paper, OK cream book paper, cream quality paper, OK map paper, OK Ishikari, Kyurei, OK form, OKH and NIP-N (all manufactured by New Oji Paper Co., Ltd.);
Kaneou, Higasihikari, quality paper for export, high quality paper for special demand, book paper, book paper L, light cream book paper, paper for textbook of science for elementary school, continuous slip paper, high quality NIP paper, Ginkan, Kinkan, Kinyou (W), Bridge, Capital, Ginkan book, Harp, Harp cream, SK Color, securities paper, Opera Cream, Opera, KYP Carte, Silvia HK, Excellent form, and NPI form DX (all manufactured by Nippon Seishi);
Pearl, Kinhishi, thin cream high quality paper, special-made book paper, super book paper, book paper, Diaform, and Inkjetform (all manufactured by Mitsubishi Paper Mills, Ltd.);
Kintan V, Kintan SW, Hakuzo, high quality publishing paper, Cream Kintan, Cream Hakuzo, securities and coupon paper, book paper, map paper, duplicating paper and HNF (all manufactured by Hokuetsu Paper Mill, Ltd.);
Shiorai, telephone directory paper, book paper, Cream Shiorai, Cream Shiorai (medium rough paper), Cream Shiorai (very rough paper) and DSK (all manufactured by Daishowa Paper Mill, Ltd.);
Sendai MP high quality paper, Nishikie, Raicho high quality paper, hanging paper, original paper for shikishi, dictionary paper, cream book, white book, cream high quality paper, map paper, and continuous slip paper (all manufactured by Chuetsu Pulp & Paper Co., Ltd.);
OP Kanezakura (Chuetsu), Kinsa, Reference book paper, exchange certificate stamp paper (white), form printing paper, KRF, white form, color form, (K)NIP, Fine PPC, Kishu Inject paper (all manufactured by Kishu Pulp & Paper Co., Ltd.);
Taio, bright form, Kant, Kant white, Dante, CM paper, Dante comic, Heine, pocket edition book paper, Heine S, new AD paper, YutoriroExcel, Excel Super A, Kanto Excel, Excel Super B, Dante Excel, Heine Excel, Excel Super C, Excel Super D, AD Excel, Excel Super E, New Bright Form, and New Bright NIP (all manufactured by Oji Paper Co., Ltd.);
Nichirin, Getsurin, Unrei, Ginga, Hakuun, Wice, Getsurin Ace, Hakuun Ace, and Unjin Ace (all manufactured by Japan Paper Industry Co., Ltd.);
Taio, Bright Form, and Bright Nip (all manufactured by Nagoya Paper Co., Ltd.);
Botan A, Kinbato, Tokubotan, Shirobotan A, Shirobotan C, Ginbato, Super Shirobotan A, Light Cream Shirobotan, special intermediate quality paper, Shirobato, Super intermediate quality paper, Aobato, Akabato, Kinbato M Snow Vision, Snow Vision, Kinbato Snow Vision, Shirobato M, Super DX, Hamanasu O, Akabato M, and HK Super printing paper (all manufactured by Honshu Paper Co., Ltd.);
Star Linden (A.AW), Star Elm, Star Maple, Star Laurel, Star Poplar, MOP, Star Cherry I, Cherry I Super, Cherry II Super, Star Cherry III, Star Cherry IV, Cherry III Super, Cherry IV Super (all manufactured by Maruju Paper Co., Ltd.); and
SHF and TRP (all manufactured by Toyo Pulp Co., Ltd.).

### <Films>

All films that are commonly utilized can be used in the present invention. They are exemplified by a polyester film, polyolefin film, polyvinyl chloride film, and polyvinylidene chloride film. A resin coated paper as a photographic paper and Yupo paper as synthetic paper can also be used.

### <Recording media for inkjet>

The recording media for inkjet are those wherein an ink receiving layer is formed on the surface by using an absorptive support member or non-absorptive support member on a substrate. The ink receiving layer is made up of a coating layer, swelling layer and minute void layer in some cases.

The swelling layer absorbs ink by the swelling of the ink receiving layer made up of a water-soluble polymer. The minute void layer is made of a binder and inorganic or organic particles wherein the secondary particle size is about 20 through 200 nm. Ink is absorbed by a fine void having a diameter of about 100 nm.

In recent years, the inkjet recording medium provided with the aforementioned fine void layer is preferably for an photograph image, wherein the RC paper employed as the substrate is designed in such a way that both sides of the paper substrate are coated with an olefin resin.

### EXAMPLE

The following describes the examples of the present invention without the present invention being restricted thereto. Unless otherwise specified, the "%" appearing in the following description of the Examples indicates percentage by mass.

### (Example 1)

### <Synthesis of high molecular compound 1>

100 g of polyacrylic acid (weight average molecular weight: 800,000) was heated and dissolved in 750 g of methanol, and 16 g of 4-hydroxybutyl acrylate glycidyl ether and 11 g of pyridine as a catalyst were added thereto. This mixture was kept at 60 °C, and was stirred for 24 hours. The temperature of this system was raised to 95 °C and methanol was removed therefrom while water was dropped. After that, the mixture was processed by ion exchange resin (PK-216H of Mitsubishi Chemical Industries, Ltd.), an aqueous solution containing 15% nonvolatile concentration was obtained by removing pyridine. In this case, 0.1 g of Irganox 2959 (Ciba Specialty Chemicals K.K) of n = 1 in the general formula (9) was mixed into 100 g of 15% aqueous solution, as the photosynthesis initiator. Then this mixture was diluted with the ion exchange water, whereby an aqueous solution containing 10% high molecular compound 1 was obtained.

### <Synthesis of high molecular compound 2>

56 g of glycidyl methacrylate, 48 g of p-hydroxybenzaldehyde, 2 g of pyridine, and 1 g of N-nitroso-phenyl hydroxyamine ammonium salt were put into a reactor, and were stirred in a hot water bath having a temperature of 80 °C for eight hours.

Then 45 g of saponified polyvinyl acetate having a degree of polymerization of 1700 and a degree of saponification of 88% was dispersed in 225 g of ion exchange water. After that, 4.5 g of phosphoric acid and p-(3-methacryloxy-2-hydroxypropyloxy) benzaldehyde obtained from the aforementioned reaction was added to this solution so that the modification rate with respect to PVA would be 1 mol%. This solution was stirred at 90 °C for six hours. The solution having been obtained was cooled down to the room temperature. Then 30 g of basic ion exchange resin was added to this solution, which was then stirred for one hour. After that, the ion exchange resin was filtered out, and the solution was mixed with Irganox 2959 (of Ciba Specialty Chemicals K.K) in the proportion of 0.1 g of Irganox 2959 with respect to 100 g of 15% aqueous solution, as a photo-polymerization initiator. Then the solution was diluted with ion exchange water, whereby aqueous solution containing 10% high molecular compound 2 was obtained.

The degree of polymerization and the degree of saponification of the saponified polyvinyl acetate were changed as required, and the loading amount of p-(3-methacryloxy-2-hydroxypropyloxy)benzaldehyde was changed to adjust the modification rate.

### [Preparation of ink]

The dye type ink sets 1 through 12 were prepared according to the following procedure:

### Preparation of ink set 1

The ink and ink set 1 were prepared according to the following procedure:
C.I. Acid Red 35: 5 parts
Aqueous solution containing 10% high molecular compound 1: 30 parts
Glycerin: 7 parts
Diethylene glycol: 15 parts
Diethylene glycol monobutyl ether: 2 parts
Olefin e1010 (by Nissin Chemical Co., Ltd.): 0.2 parts
Ion exchange water was added to the aforementioned solution and a magenta ink was produced, wherein the total amount was 100 parts.
A black ink was obtained in the same manner using C.I. Direct Black 19 instead of the C.I. Acid Red 35 of magenta ink.

### Preparation of ink set 2

The ink set 2 was prepared according to the same procedure as that of the ink set 1, except that the aqueous solution containing 10% high molecular compound 1 in the ink set 1 was replaced by the compound RSP (by Toyo Gosei Kogyo K.K., wherein the degree of polymerization of the backbone chain PVA was 1700, the degree of saponification was 88%, modification rate was 0.9 mol%, and solid concentration was 10%) wherein R was expressed by p-phenylene group in the general formula (3).

### Preparation of ink set 3

The ink set 3 was prepared according to the same procedure as that of the ink set 1, except that the aqueous solution containing 10% high molecular compound 1 was replaced by the aqueous solution containing 10% high molecular compound 2 (with a modification rate of 0.5).

### Preparation of ink set 4

The ink set 4 was prepared according to the same procedure as that of the ink set 3, except that the degree of polymerization of the backbone chain PVA of the high molecular compound 2 was 2000, and the modification rate was 3.8 mol%.

### Preparation of ink set 5

The ink set 5 was prepared according to the same procedure as that of the ink set 3, except that the degree of polymerization of the backbone chain PVA of the high molecular compound 2 was 2000, and the degree of saponification was 99 mol% and the modification rate was 1.4 mol%.

### Preparation of ink set 6

The ink set 6 was prepared according to the same procedure as that of the ink set 3, except that the degree of saponification of the backbone chain PVA of the high molecular compound 2 was 70%, and the modification rate was 1.4 mol%.

### Preparation of ink set 7

The ink set 7 was prepared according to the same procedure as that of the ink set 3, except that the degree of polymerization of the backbone chain PVA of the high molecular compound 2 was 3500, the degree of saponification was 88% and the degree of saponification was 1.0 mol%.

### Preparation of ink set 8

The ink set 8 was prepared according to the same procedure as that of the ink set 2, except that the degree of polymerization of the backbone chain PVA was 300, and the degree of saponification was 4.0 mol%.

### Preparation of ink set 9

The ink set 9 was prepared according to the same procedure as that of the ink set 8, except that the degree of polymerization of the high molecular compound was 300.

### Preparation of ink set 10

The ink set 10 was prepared according to the following procedure:
Diexpoxy acrylic acid ester of 1, 4-butadiol (LR8765 by BASF): 10 parts
Irgacure 651 (photo-polymerization initiator by Ciba Specialty Chemicals K.K): 0.4 parts
C.I. Acid Red 35: 4 parts
Aqueous solution containing 10% Inogen ET150 (by Daiichi Kogyo Seiyaku Co., Ltd.): 7 parts
Diethylene glycol: 15 parts
Ion exchange water was added to this solution so that the total amount would be 100 parts.
In the same manner, black ink was produced using the Direct Black 19, whereby the inkset 10 was obtained. The LR8765 used in this case was a aqueous acryl UV monomer.

### Preparation of ink set 11

The ink set 11 was prepared according to the same procedure as that of the ink set 1, except that water was used instead of the aqueous solution containing 10% high molecular compound 1.

### Preparation of ink set 12

The ink set 12 was prepared according to the same procedure as that of the ink set 2, except that the aqueous solution containing 10% polyvinyl alcohol (having a degree of polymerization of 2000 and a degree of saponification 88%) was used instead of the aqueous solution containing 10% high molecular compound 2.

### Preparation of ink set 13

The ink set 13 was prepared according to the same procedure as that of the ink set 2, except that the Takelac W-6060 shown below was used instead of the aqueous solution containing 10% high molecular compound 2.

Takelac W-6060 (urethane based soap-free latex by Takeda Chemical Industries, Ltd., wherein solid = 30%, Tg = 25 °C, and average particle size = 150 nm)

### Preparation of ink set 14

The ink set 14 was prepared according to the same procedure as that of the ink set 1, except that SPP manufactured by Toyo Gosei Co., Ltd. (having a degree of polymerization of 500, a degree of saponification 88%, a modification rate of 1.8 mol% and a solid concentration of 10%) was used instead of the aqueous solution containing 10% high molecular compound 1. This high molecular compound was cationic on the side chain.

### Preparation of ink set 15

The ink set 15 was prepared according to the same procedure as that of the ink set 4, except that the amount of the aqueous solution containing 10% high molecular compound was 60 parts instead of 30 parts, and the ion exchange water was reduced by the corresponding amount.

### Preparation of ink set 16

The ink set 16 was prepared according to the same procedure as that of the ink set 4, except that the amount of the aqueous solution containing 10% high molecular compound was 6 parts instead of 30 parts, and the ion exchange water was increased by the corresponding amount.

### Preparation of ink set 17

The ink set 17 was prepared according to the same procedure as that of the ink set 3, except that the aqueous solution containing 10% high molecular compound 2 was replaced by the aqueous solution containing 10% compound Z shown below.

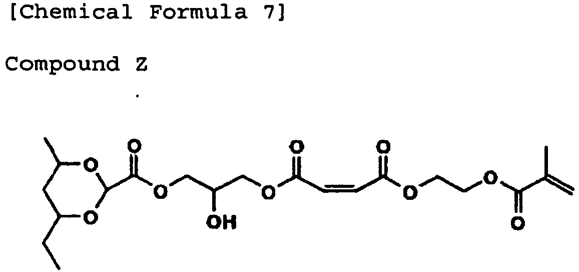

### Preparation of ink sets 18 through 34

The ink sets 18 through 34 were prepared according to the same procedure as that of the ink sets 1 through 17, except that the following magenta pigment dispersion and black pigment dispersion were used instead of the dyes used for the ink sets 1 through 17.

### [Preparation of pigment dispersion]

### (Preparation of magenta pigment dispersion)

The following additives were mixed and were dispersed using a sand grinder loaded with 50% by volume of zirconia beads having a diameter of 0.5 mm, whereby a magenta pigment dispersion containing 10% magenta pigment was prepared. The magenta pigment particles contained in this magenta pigment dispersion had an average particle size of 83 nm. In this case, the particle size was measured by Zetasizer Model 1000HS of Malbarn.

### C.I. Pigment Red 12: 12 parts

Johncryl 61 (acryl styrene resin dispersant of Johnson): 3 parts
Glycerin: 15 parts
Ion exchange water: 61 parts

### (Preparation of black pigment dispersion)

Carbon black self-dispersion cabo-jet300 of Cabot was diluted by ion exchange water to prepare a black pigment dispersion containing 10% carbon black. The carbon black contained in the black pigment dispersion had an average particle size of 153 nm. In this case, the particle size was measured by Zetasizer Model 1000HS of Malbarn.

### Preparation of ink set 35

Solvent based actinic energy ray curable ink was prepared according to the following procedure, whereby the ink set 35 was prepared.

### (Preparation of magenta ink)

C.I. pigment red 122: 10 parts
Ajisuper PB821 (by Ajinomoto Fine Techno Co., Inc.): 3 parts
Aronix M5700 (by Toagosei Co., Ltd.): 7 parts
Ethylene oxide added 1, 6-hexanediol acrylate: 72 parts
3-methoxybutyl acrylate: 8 parts
Irgacure 369 (by Ciba Specialty Chemicals K.K): 5 parts

The aforementioned components were mixed and stirred, and the resultant solution was filtered to produce an actinic energy ray curable magenta ink. The ethylene oxide added 1, 6-hexanediol acrylate used in this test was a non-aqueous acryl UV monomer.

### (Preparation of black ink)

Carbon black (MA-7 by Mitsubishi Chemical Industries, Ltd.): 10 parts
Ajisuper PB821 (by Ajinomoto Fine Techno Co., Inc.): 3 parts
Aronix M5700 (by Toagosei Co., Ltd.): 7 parts
Ethylene oxide added 1, 6-hexanediol acrylate: 72 parts 3-methoxybutyl acrylate: 8 parts
Irgacure 369 (by Ciba Specialty Chemicals K.K): 5 parts

The aforementioned components were mixed and stirred, and the resultant solution was filtered to produce an actinic energy ray curable black ink.

### «Formation and evaluation of inkjet image»

### (Evaluation of resistance to feathering)

A black fine wire having a width of 250 µm and a length of 5 cm was printed out on the quality paper (First Class paper of Konica Minolta Business Technologies), using a piezo type head of 128 nozzles having a nozzle diameter of 25 µm at a drive frequency of 12 kHz, a nozzle density of 180 dpi ("dpi" indicates the number of dots per inch (2.54 cm) in the following description), wherein an on-demand type inkjet printer having the maximum recording density of 720 x 720 dpi was utilized. The printed output was checked by visual observation to evaluate the resistance to feathering according to the following criteria:
Each ink was emitted on a continuous basis, and was exposed to a 120W/cm metal halide lamp (MAL 400NL with a source power of 3 kW per hour, by Japan Storage Battery Co., Ltd.) 0.1 second after arrival of the emitted ink.
   A: Excellent reproduction of a fine line without the line being broadened by bleeding
   B: Ink bleeding was observed at less than five positions along the paper fiber, although there was no line being broadened by bleeding.
   C: Ink bleeding was observed at less than ten positions along the paper fiber, although there was no line being broadened by bleeding.
   D: The line was slightly broadened by bleeding, and ink bleeding was observed at ten or more positions along the paper fiber.
   E: The line was much broadened by bleeding, and ink bleeding was observed at twenty or more positions along the paper fiber.

Of the above evaluations, "D" and "E" indicate that the relevant test sample cannot be used as a product.

### (Evaluation of resistance to beading)

A 10 cm x 10 cm magenta sold image was printed on the art paper (NK art Kanafuji N by Oji Paper Co., Ltd.), using a piezo head of 128 nozzles having a nozzle diameter of 25 µm at a drive frequency of 12 kHz and a nozzle density of 180 dpi wherein the on-demand type inkjet printer having a maximum recording density of 720 x 720 dpi was employed. The printed output was checked by visual observation to evaluate the resistance to beading according to the following criteria:
Each ink was emitted on a continuous basis, and was exposed to a 120W/cm metal halide lamp (MAL 400NL with a source power of 3 kW per hour, by Japan Storage Battery Co., Ltd.) 0.1 second after arrival of the emitted ink.
   A: Having uniform image.
   B: Mottled noises are observed at less than five positions when carefully observed.
   C: Mottled noises are observed at less than ten positions when carefully observed.
   D: Mottled noises are clearly visible at ten or more positions.
   E: Mottled noises are visible at twenty or more positions.

Of the above evaluations, "D" and "E" indicate that the relevant test sample cannot be used as a product.

### (Evaluation of resistance to color bleeding)

A 100 µm wide black fine line was printed out on the substrate of magenta sold on the art paper (NK art Kanafuji N by Oji Paper Co., Ltd.), using a piezo head of 128 nozzles having a nozzle diameter of 25 µm at a drive frequency of 12 kHz and a nozzle density of 180 dpi wherein the on-demand type inkjet printer having a maximum recording density of 720 x 720 dpi was employed. The printed output was checked by visual observation to evaluate the resistance to color bleeding according to the following criteria:
Each ink was emitted on a continuous basis, and was exposed to a 120W/cm metal halide lamp (MAL 400NL with a source power of 3 kW per hour, by Japan Storage Battery Co., Ltd.) 0.1 second after arrival of the emitted ink.
   A: There is a clear boundary between the fine line and sold portion.
   B: There is slight bleeding on the boundary in some portion without practical quality problem.
   C: Bleeding is observed on the boundary within a tolerable range for practical use
   D: Bleeding is clearly observed on the boundary with the line width increased to 1.5 times, involving a quality problem with practical use
   E: Unclear boundary between the fine line and sold portion, demonstrating a very poor resistance to bleeding

### (Evaluation of resistance to fretting)

Similarly to the aforementioned procedure used to evaluate the resistance to color bleeding, a 100 µm wide black fine line was printed out on recording paper. Three minutes later, the black fine line image was rubbed back and forth five times by a finger, and the resistance to fretting was evaluated according to the following criteria:
A: No change on the printed image at all
B: A slight scratch was observed when carefully viewed, without practical quality problem.
C: A small amount of scratch was observed, but within a tolerable range for practical use
D: Image density is reduced by a scratch to raise a practical quality problem.
E: The black fine line image having been formed is separated from the recording paper and the quality is completely out of the tolerable range.

### (Evaluation of water resistance)

Similarly to the aforementioned procedure used to evaluate the resistance to color bleeding, a 100 µm wide black fine line was printed out on recording paper. Three minutes later, pure water was dropped. Another 15 seconds later, the black fine line image was rubbed back and forth five times by a finger, and the resistance to water was evaluated according to the following criteria:
A: No change on the printed image at all
B: A slight scratch was observed when carefully viewed, without practical quality problem.
C: A small amount of scratch was observed, but within a tolerable range for practical use
D: Image density is reduced by a scratch to raise a practical quality problem.
E: The black fine line image having been formed is separated from the recording paper and the quality is completely out of the tolerable range.

### [Glossiness]

A 10 cm x 10 cm solid black was printed out on the art paper (NK art Kongo N by Oji Paper Co., Ltd.), using a piezo head of 128 nozzles having a nozzle diameter of 25 µm at a drive frequency of 12 kHz and a nozzle density of 180 dpi wherein the on-demand type inkjet printer having a maximum recording density of 720 x 720 dpi was employed. The printed output was checked by visual observation to evaluate the glossiness according to the following criteria:
Each ink was emitted on a continuous basis, and was exposed to a 120W/cm metal halide lamp (MAL 400NL with a source power of 3 kW per hour, by Japan Storage Battery Co., Ltd.) 0.1 second after arrival of the emitted ink.
   A: Almost no difference in the level of glossiness between the recorded surface and the substrate, without a sense of incompatibility
   B: A slight difference in the level of glossiness between the recorded surface and the substrate within a tolerable range
   C: A slight difference in the level of glossiness between the recorded surface and the substrate can be visually observed, and the level of glossiness on the recorded surface is considerably higher than that on the substrate.
   D: A clear difference in the level of glossiness between the recorded surface and the substrate can be visually observed, and the level of glossiness on the recorded surface is considerably higher than that on the substrate.
   E: A clear difference in the level of glossiness between the recorded surface and the substrate can be visually observed, and the level of glossiness on the recorded surface is considerably lower than that on the substrate.

### [Density]

A 10 cm x 10 cm solid black was printed out on the quality paper (First Class paper of Konica Minolta Technologies), using a piezo type head of 128 nozzles having a nozzle diameter of 25 µm at a drive frequency of 12 kHz, a nozzle density of 180 dpi ("dpi" indicates the number of dots per inch (2.54 cm) in the following description), wherein an on-demand type inject printer having the maximum recording density of 720 x 720 dpi was utilized. The black density was measured by an X-Rite density measuring instrument to evaluate the density according to the following criteria:
Each ink was emitted on a continuous basis, and was exposed to a 120W/cm metal halide lamp (MAL 400NL with a source power of 3 kW per hour, by Japan Storage Battery Co., Ltd.) 0.1 second after arrival of the emitted ink.
   A: Black density: 1.5 or more
   B: Black density: 1.4 or more through 1.5 exclusive
   C: Black density: 1.2 or more through 1.4 exclusive
   D: Black density: 0.8 or more through 1.2 exclusive
   E: Black density: below 0.8

Tables 1 and 2 show the results of the above tests.

**Table 1**

| Ink set No. | ** | | | | | Colorant | Art paper | | | | | Quality paper | | | Remarks |
|---|---|---|---|---|---|---|---|---|---|---|---|---|---|---|---|
| | Type | *1 | *2 | *3 | Ionic property on side chain | | Beading | *4 | Glossiness | *5 | Frett -ing | *4 | *6 | Density | |
| 1 | ** 1 | - | - | - | Nonionic | Dye | A | B | A | C | C | A | B | B | Inv. |
| 2 | RSP | 1700 | 88 | 0.9 | Anionic | Dye | B | B | A | B | B | A | B | A | Inv. |
| 3 | ** 2 | 1700 | 88 | 0.5 | Nonionic | Dye | B | B | A | C | B | A | B | A | Inv. |
| 4 | ** 2 | 2000 | 88 | 3.8 | Nonionic | Dye | A | A | A | A | A | A | A | A | Inv. |
| 5 | ** 2 | 2000 | 99 | 1.4 | Nonionic | Dye | A | A | A | A | B | A | A | A | Inv. |
| 6 | ** 2 | 2000 | 70 | 1.4 | Nonionic | Dye | A | B | C | B | B | B | B | A | Inv. |
| 7 | ** 2 | 3500 | 88 | 1 | Nonionic | Dye | A | A | A | A | B | A | A | A | Inv. |
| 8 | RSP | 300 | 88 | 4 | Anionic | Dye | B | B | A | C | C | B | B | C | Inv. |
| 9 | RSP | 200 | 88 | 4 | Anionic | Dye | B | B | A | C | C | B | B | C | Inv. |
| 10 | LR8765 | - | - | - | - | Dye | A | C | B | E | B | C | | c | Comp. |
| 11 | None | - | - | - | - | Dye | E | E | B | E | C | D | E | E | Comp. |
| 12 | Polyvinyl alcohol | 2000 | 88 | - | - | Dye | E | E | B | C | C | D | D | E | Comp. |
| 13 | Takelac W-6060 | - | - | - | - | Dye | E | E | B | B | B | E | E | E | Comp. |
| 14 | SPP | 1700 | 88 | 1.8 | Cationic | Dye | C | C | D | C | C | C | C | D | Comp. . |
| 15 | ** 2 (6% by mass) | 2000 | 88 | 3.8 | Nonionic | Dye | A | A | B | A | B | A | A | B | Inv. |
| 16 | ** 2 (0.6% by mass) | 2000 | 88 | 3.8 | Nonionic | Dye | B | B | C | B | B | B | B | B | Inv. |
| 17 | Compound Z | 1700 | 88 | 2.8 | Nonionic | Dye | B | B | B | C | C | A | B | C | Inv. |

| | | | | | | | | | | | | | | | |
|---|---|---|---|---|---|---|---|---|---|---|---|---|---|---|---|
| *1: Degree of polymerization, *2: Degree of saponification, *3: Modification rate *4: Color bleeding, *5: Water resistance, *6: Feathering, Inv.: Invention, Comp.: Comparative example, **: High molecular compound | | | | | | | | | | | | | | | |

**Table 2**

| Ink set No. | ** | | | | | Colorant | Art paper | | | | | Quality paper | | | Remarks |
|---|---|---|---|---|---|---|---|---|---|---|---|---|---|---|---|
| | Type | *1 | *2 | *3 | Ionic property on side chain | | Beading | *4 | Glossiness | *5 | Frett -ing | *4 | *6 | Density | |
| 18 | ** 1 | - | - | - | Nonionic | Pigment | A | B | A | B | C | A | B | B | Inv. |
| 19 | RSP | 1700 | 88 | 0.9 | Anionic | Pigment | A | B | A | B | B | A | A | A | Inv. |
| 20 | ** 2 | 1700 | 70 | 0.5 | Nonionic | Pigment | B | B | A | C | B | A | B | A | Inv. |
| 21 | ** 2 | 2000 | 88 | 3.8 | Nonionic | Pigment | A | A | A | A | A | A | A | A | Inv. |
| 22 | ** 2 | 2000 | 88 | 1.4 | Nonionic | Pigment | A | A | A | A | B | A | A | A | Inv. |
| 23 | ** 2 | 2000 | 99 | 1.4 | Nonionic | Pigment | A | B | C | B | B | B | B | A | Inv. |
| 24 | ** 2 | 3500 | 88 | 1 | Nonionic | Pigment | A | A | A | A | B | A | A | A | Inv. |
| 25 | RSP | 300 | 88 | 4 | Anionic | Pigment | A | B | A | C | C | B | B | C | Inv. |
| 26 | RSP | 200 | 88 | 4 | Anionic | Pigment | A | B | A | C | C | B | B | C | Inv. |
| 27 | LR8765 | - | - | - | - | Pigment | A | C | B | D | B | C | C | C | Comp. |
| 28 | None | - | - | - | - | Pigment | E | E | B | E | E | D | E | E | Comp. |
| 29 | Polyvinyl alcohol | 2000 | 88 | - | - | Pigment | E | E | B | C | B | D | D | D | Comp . |
| 30 | Takelac W-6060 | - | - | - | - | Pigment | E | D | B | B | B | C | D | C | Comp. |
| 31 | SPP | 1700 | 88 | 1.8 | Cationic | Pigment | C | C | D | C | C | C | C | D | Comp. |
| 32 | ** 2 (6% by mass) | 2000 | 88 | 3.8 | Nonionic | Pigment | A | A | B | A | A | A | A | B | Inv. |
| 33 | ** 2 (0.6% by mass) | 2000 | 88 | 3.8 | Anionic | Pigment | B | B | C | B | B | B | B | B | Inv. |
| 34 | Compound Z | 1700 | 88 | 2.8 | Nonionic | Pigment | B | B | B | C | C | A | B | C | Inv. |
| 35 | Non-aqueous acrylic UV monomer | | - | - | - | Pigment | B | B | E | A | B | D | B | D | Comp. |

| | | | | | | | | | | | | | | | |
|---|---|---|---|---|---|---|---|---|---|---|---|---|---|---|---|
| *1: Degree of polymerization, *2: Degree of saponification, *3: Modification rate *4: Color bleeding, *5: Water resistance, *6: Feathering, Inv.: Invention,Comp.: Comparative example, **: High molecular compound | | | | | | | | | | | | | | | |

### (Example 2)

Each of the ink sets 1 through 35 produced in the Example 1 was checked to evaluate the following ink keeping quality and ink emission on a continuous basis.

### (Ink keeping quality)

Each of the ink sets was stored at 60 °C and the ink keeping quality was evaluated according to the following criteria:
A: No precipitation occurred to black or magenta ink in 2 weeks
B: Precipitation occurred to either black or magenta ink in 2 weeks
C: Precipitation occurred to either black or magenta ink in a week
D: Precipitation occurred to both black and magenta ink in a week
E: Precipitation occurred to both black and magenta ink in three days

### (Ink emission on a continuous basis)

Ink was emitted for ten hours on a continuous basis, using a piezo type head of 128 nozzles having a nozzle diameter of 25 µm at a drive frequency of 12 kHz, a nozzle density of 180 dpi ("dpi" indicates the number of dots per inch (2.54 cm) in the following description), and the non-emitting nozzles was counted. Ink emission was evaluated according to the following criteria:
A: Number of non-emitting nozzles after continuous ink emission for ten hours: 0
B: Number of non-emitting nozzles after continuous ink emission for ten hours: 1 through 5
C: Number of non-emitting nozzles after continuous ink emission for ten hours: 6 through 10
D: Number of non-emitting nozzles after continuous ink emission for ten hours: 11 through 50
E: Number of non-emitting nozzles after continuous ink emission for ten hours: more than 50

Tables 3 and 4 show the results of the above tests.

**Table 3**

| Ink set No. | ** | | | | | Colorant | Ink | | Remarks |
|---|---|---|---|---|---|---|---|---|---|
| | Type | *1 | *2 | Modification rate | *3 | | *4 | Ink emission | |
| 1 | ** 1 | - | - | - | Nonionic | Dye | A | A | Inv. |
| 2 | RSP | 1700 | 88 | 0.9 | Anionic | Dye | B | B | Inv. |
| 3 | ** 2 | 1700 | 88 | 0.5 | Nonionic | Dye | A | A | Inv. |
| 4 | ** 2 | 2000 | 88 | 3.8 | Nonionic | Dye | A | A | Inv. |
| 5 | ** 2 | 2000 | 99 | 1.4 | Nonionic | Dye | A | A | Inv. |
| 6 | ** 2 | 2000 | 70 | 1.4 | Nonionic | Dye | A | A | Inv. |
| 7 | ** 2 | 3500 | 88 | 1 | Nonionic | Dye | A | B | Inv. |
| 8 | RSP | 300 | 88 | 4 | Anionic | Dye | B | A | Inv. |
| 9 | RSP | 200 | 88 | 4 | Anionic | Dye | B | A | Inv. |
| 10 | LR8765 | - | - | - | - | Dye | C | C | Comp. |
| 11 | None | - | - | - | - | Dye | A | A | Comp. |
| 12 | Polyvinyl alcohol | 2000 | 88 | - | - | Dye | B | E | Comp. |
| 13 | Takelac W-6060 | - | - | - | - | Dye | C | E | Comp. |
| 14 | SPP | 1700 | 88 | 1.8 | Cationic | Dye | E | D | Comp. |
| 15 | ** 2 (6% by mass) | 2000 | 88 | 3.8 | Nonionic | Dye | B | B | Inv. |
| 16 | ** 2 (0.6% by mass) | 2000 | 88 | 3.8 | Nonionic | Dye | A | A | Inv. |
| 17 | Compound Z | 1700 | 88 | 2.8 | Nonionic | Dye | A | B | Inv. |

| | | | | | | | | | |
|---|---|---|---|---|---|---|---|---|---|
| **: High molecular compound, *1: Degree of polymerization, *2: Degree of saponification, *3: Ionic property on side chain, *4: Ink keeping quality, Inv.: Invention, Comp.: Comparative example | | | | | | | | | |

**Table 4**

| Ink set No. | ** | | | | | Colorant | Ink | | Remarks |
|---|---|---|---|---|---|---|---|---|---|
| | Type | *1 | *2 | Modification rate | *3 | | *4 | Ink emission | |
| 18 | ** 1 | - | - | - | Nonionic | Pigment | A | A | Inv. |
| 19 | RSP | 1700 | 88 | 0.9 | Anionic | Pigment | B | B | Inv. |
| 20 | * 2 | 1700 | 70 | 0.5 | Nonionic | Pigment | A | A | Inv. |
| 21 | ** 2 | 2000 | 88 | 3.8 | Nonionic | Pigment | A | A | Inv. |
| 22 | ** 2 | 2000 | 88 | 1.4 | Nonionic | Pigment | A | A | Inv. |
| 23 | ** 2 | 2000 | 99 | 1.4 | Nonionic | Pigment | A | A | Inv. |
| 24 | ** 2 | 3500 | 88 | 1 | Nonionic | Pigment | A | B | Inv. |
| 25 | RSP | 300 | 88 | 4 | Anionic | Pigment | B | A | Inv. |
| 26 | RSP | 200 | 88 | 4 | Anionic | Pigment | B | A | Inv. |
| 27 | LR8765 | - | - | - | - | Pigment | C | C | Comp. |
| 28 | None | - | - | - | - | Pigment | A | A | Comp. |
| 29 | Polyvinyl alcohol | 2000 | 88 | - | - | Pigment | C | E | Comp. |
| 30 | Takelac W-6060 | - | - | - | - | Pigment | C | E | Comp. |
| 31 | SPP | 1700 | 88 | 1.8 | Cationic | Pigment | E | D | Comp. |
| 32 | ** 2 (6% by mass) | 2000 | 88 | 3.8 | Nonionic | Pigment | B | B | Inv. |
| 33 | ** 2 (0.6% by mass) | 2000 | 88 | 3.8 | Nonionic | Pigment | A | A | Inv. |
| 34 | Compound Z | 1700 | 88 | 2.8 | Nonionic | Pigment | A | B | Inv. |
| 35 | Non-aqueous acrylic UV monomer | - | - | - | - | Pigment | B | C | Comp. |

| | | | | | | | | | |
|---|---|---|---|---|---|---|---|---|---|
| **: High molecular compound, *1: Degree of polymerization, *2: Degree of saponification, *3: Ionic property on side chain, *4: Ink keeping quality, Inv.: Invention, Comp.: Comparative example | | | | | | | | | |

It has been demonstrated that, in both the dyes and pigment systems, the samples of the present invention exhibit excellent printing performances and superb durability, independently of the type of the recording medium.

### INDUSTRIAL APPLICABILITY

The present invention provides an inkjet ink that excels in resistance to feathering in plain paper recording and that is suitable for recording free from beading, color bleeding, etc. on a medium of low or no ink absorbency; and a method of recording using this ink. This inkjet ink includes at least a colorant, water, and a high molecular compound wherein the hydrophilic backbone chain has multiple side chains among which a crosslinking bond can be made by exposure to actinic energy rays. The colorant is anionic and the side chains of the high molecular compound are anionic or nonionic.

## Claims

1. An inkjet ink comprising:
at least a colorant, water and a high molecular weight compound which has a hydrophilic main chain and plural side chains on the hydrophilic main chain and is cross-linkable among side chains by being irradiated with active energy rays,
wherein the colorant is anionic and
the side chains of the high molecular compound are anionic or nonionic.

2. The inkjet ink of claim 1 contains the high molecular weight compound in an amount of from 0.8 to 5.0 % by mass for the total amount of the ink.

3. The inkjet ink of claim 1 or 2, wherein a partial structure of the hydrophilic main chain and the plural side chains is represented by General formula (A):
Poly- {(X₁)ₘ- [B.- (Y₁)ₙ]ₚ}
in the formula, Poly represents the hydrophilic main chain, an inside of { } represents the side chains, X₁ represents a (p+1) valent connecting group, B represents a cross-linkable group, and Y1 represents a hydrogen atom or a substituent, and m is 0 or 1, n is 0 or 1 and p represents a positive integer, and when p is 2 or more, a plurality of B and Y₁ are the same to each other or different from each other.

4. The inkjet ink in any one of claims 1 to 3, wherein the hydrophilic main chain is a saponified substance of polyvinyl acetate having a saponification degree of 77 to 99 % and a polymerization degree of 200 to 4000.

5. The inkjet ink in any one of claims 1 to 4, wherein the modification rate of the side chains to the hydrophilic main chain is 1 mol% to 4 mol%.

6. The inkjet ink in any one of claims 1 to 5, wherein the inkjet ink further contains a water-soluble photo-polymerization initiator.

7. An ink set comprising:
a plurality of inkjet inks in any one of claims 1 to 6.

8. An inkjet recording method comprising:
jetting the inkjet ink described in any one of claims 1 to 6;
irradiating the jetted inkjet ink with ultraviolet rays; and
drying the inkjet ink.

9. An inkjet recording method comprising:
jetting the inkjet ink of the ink set described in claim 7;
irradiating the jetted inkjet ink with ultraviolet rays; and
drying the inkjet ink.

10. The inkjet recording method of claim 8 or 9, wherein the recording is conducted for a regular paper.

11. The inkjet recording method of claim 8 or 9, wherein the recording is conducted for an art paper or a coated paper.

12. The inkjet recording method of claim 8 or 9, wherein the recording is conducted for a non-absorptive medium.

## Patentansprüche

1. Tintenstrahltinte, umfassend:
mindestens ein Farbmittel, Wasser und eine Verbindung mit hoher relativer Molekülmasse, wobei die Verbindung eine hydrophile Hauptkette und mehrere Seitenketten an der hydrophilen Hauptkette aufweist und durch Bestrahlung mit Strahlen wirksamer Energie über Seitenketten vernetzbar ist,
wobei das Farbmittel anionisch ist und die Seitenketten der hochmolekularen Verbindung anionisch oder nichtionisch sind.

2. Tintenstrahltinte nach Anspruch 1, die die Verbindung mit hoher relativer Molekülmasse in einer Menge von 0,8 bis 5,0 Masse-%, bezogen auf die Gesamtmenge der Tinte, enthält.

3. Tintenstrahltinte nach Anspruch 1 oder 2, wobei eine Teilstruktur der hydrophilen Hauptkette und der mehreren Seitenketten durch die allgemeine Formel (A) dargestellt wird:
Poly-{(X₁)ₘ-[B-(Y₁)ₙ]ₚ}
wobei in der Formel Poly für die hydrophile Hauptkette steht, das Innere von { } für die Seitenketten steht, X₁ für eine (p+1)-wertige Verbindungsgruppe steht, B für eine vernetzungsfähige Gruppe steht und Y₁ für ein Wasserstoffatom oder einen Substituenten steht, und m für 0 oder 1 steht, n für 0 oder 1 steht und p für eine positive ganze Zahl steht, und, wenn p für 2 oder mehr steht, mehrere Gruppen B und Y₁ einander gleich oder voneinander verschieden sind.

4. Tintenstrahltinte nach einem der Ansprüche 1 bis 3, wobei die hydrophile Hauptkette eine verseifte Substanz von Polyvinylacetat mit einem Verseifungsgrad von 77 bis 99 % und einem Polymerisationsgrad von 200 bis 4000 ist.

5. Tintenstrahltinte nach einem der Ansprüche 1 bis 4, wobei die Modifizierungsrate der Seitenketten gegenüber der hydrophilen Hauptkette 1 Mol-% bis 4 Mol-% beträgt.

6. Tintenstrahltinte nach einem der Ansprüche 1 bis 5, wobei die Tintenstrahltinte ferner einen wasserlöslichen Fotopolymerisationsinitiator enthält.

7. Tintensatz, der mehrere Tintenstrahltinten nach einem der Ansprüche 1 bis 6 umfasst.

8. Tintenstrahlaufzeichnungsverfahren, umfassend:
Ausstoßen bzw. Aufspritzen der Tintenstrahltinte, die in einem der Ansprüche 1 bis 6 beschrieben ist;
Bestrahlen der ausgestoßenen bzw. aufgespritzten Tintenstrahltinte mit Ultraviolettstrahlung und
Trocknen der Tintenstrahltinte.

9. Tintenstrahlaufzeichnungsverfahren, umfassend:
Ausstoßen bzw. Aufspritzen der Tintenstrahltinte des Tintensatzes, der im Anspruch 7 beschrieben ist;
Bestrahlen der ausgestoßenen bzw. aufgespritzten Tintenstrahltinte mit Ultraviolettstrahlung und
Trocknen der Tintenstrahltinte.

10. Tintenstrahlaufzeichnungsverfahren nach Anspruch 8 oder 9, wobei die Aufzeichnung für ein einfaches Papier durchgeführt wird.

11. Tintenstrahlaufzeichnungsverfahren nach Anspruch 8 oder 9, wobei die Aufzeichnung für ein Kunstdruckpapier oder ein gestrichenes Papier durchgeführt wird.

12. Tintenstrahlaufzeichnungsverfahren nach Anspruch 8 oder 9, wobei die Aufzeichnung für ein nichtabsorbierendes Medium durchgeführt wird.

## Revendications

1. Encre pour impression par jets d'encre, comprenant au moins un colorant, de l'eau et un composé à haut poids moléculaire qui comporte une chaîne principale hydrophile et plusieurs chaînes latérales attachées à la chaîne principale hydrophile et qui peut être réticulé, au niveau des chaînes latérales, par irradiation avec des rayons énergétiques actifs, dans laquelle encre
- le colorant est anionique,
- et les chaînes latérales du composé à haut poids moléculaire sont anioniques ou non-ioniques.

2. Encre pour impression par jets d'encre, conforme à la revendication 1, qui contient du composé à haut poids moléculaire en une quantité représentant de 0,8 à 5,0 % de la masse totale de l'encre.

3. Encre pour impression par jets d'encre, conforme à la revendication 1 ou 2, dans laquelle une structure partielle de la chaîne principale et des chaînes latérales est représentée par la formule générale (A) suivante :
Poly-{(X₁)ₘ-[B-(Y₁)ₙ]ₚ}
dans laquelle
- "Poly" représente la chaîne principale hydrophile,
- ce qui est à l'intérieur des accolades { } représente les chaînes latérales,
- X₁ représente un groupe de raccord, de valence p+1,
- B représente un groupe qui peut être le siège d'une réticulation,
- Y₁ représente un atome d'hydrogène ou un substituant,
- et l'indice m vaut 0 ou 1, l'indice n vaut 0 ou 1, et l'indice p est un nombre entier positif,
étant entendu que, si l'indice p vaut 2 ou plus, les entités représentées par les symboles B et Y₁ sont identiques les unes aux autres ou différentes les unes des autres.

4. Encre pour impression par jets d'encre, conforme à l'une des revendications 1 à 3, dans laquelle la chaîne principale hydrophile est un poly(acétate de vinyle) dont le degré de polymérisation vaut de 200 à 4000 et qui est saponifié à un taux de saponification de 77 à 99 %.

5. Encre pour impression par jets d'encre, conforme à l'une des revendications 1 à 4, dans laquelle le taux de modification, des chaînes latérales à la chaîne principale hydrophile, vaut de 1 à 4 % en moles.

6. Encre pour impression par jets d'encre, conforme à l'une des revendications 1 à 5, laquelle encre pour impression par jets d'encre contient en outre un amorceur hydrosoluble de photopolymérisation.

7. Jeu d'encres comprenant plusieurs encres pour impression par jets d'encre, conformes à l'une des revendications 1 à 6.

8. Procédé d'impression par jets d'encre, comprenant les étapes suivantes :
- projeter une encre pour impression par jets d'encre, conforme à l'une des revendications 1 à 6,
- irradier cette encre projetée avec des rayons ultraviolets ;
- et faire sécher cette encre pour impression par jets d'encre.

9. Procédé d'enregistrement par jets d'encres, comprenant les étapes suivantes :
- projeter les encres pour impression par jets d'encre d'un jeu d'encres conforme à la revendication 7,
- irradier ces encres projetées avec des rayons ultraviolets ;
- et faire sécher ces encres pour impression par jets d'encre.

10. Procédé d'enregistrement par jets d'encre(s), conforme à la revendication 8 ou 9, dans lequel l'enregistrement est effectué sur un papier simple.

11. Procédé d'enregistrement par jets d'encre(s), conforme à la revendication 8 ou 9, dans lequel l'enregistrement est effectué sur un papier d'art ou un papier couché.

12. Procédé d'enregistrement par jets d'encre(s), conforme à la revendication 8 ou 9, dans lequel l'enregistrement est effectué sur un support non-absorbant.
